# EUROPEAN PATENT SPECIFICATION

(11) **EP 4 242 755 B1**
(45) Date of publication and mention of the grant of the patent: **17.12.2025**
(21) Application number: 23160480.2
(22) Date of filing: 07.03.2023
(51) Int. Cl.: G05B 13/02, G05B 19/18

(54) **INFORMATION PROCESSING DEVICE, INFORMATION PROCESSING METHOD, AND INFORMATION PROCESSING PROGRAM**
INFORMATIONSVERARBEITUNGSVORRICHTUNG, INFORMATIONSVERARBEITUNGSVERFAHREN UND INFORMATIONSVERARBEITUNGSPROGRAMM
DISPOSITIF, PROCÉDÉ ET PROGRAMME DE TRAITEMENT D'INFORMATIONS

(30) Priority: 10.03.2022 JP 2022037380
(43) Date of publication of application: 13.09.2023
(73) Proprietor: FUJIFILM Corporation, Tokyo 106-8620 (JP)
(72) Inventor: UCHIUMI, Kyohisa, Minami-ashigara-shi, 250-0193 (JP)
(74) Representative: Meissner Bolte Partnerschaft mbB

(56) References cited:
- WO-A1-2021/060090
- US-A1- 2017 270 434

## Description

### BACKGROUND OF THE INVENTION

### 1. Field of the Invention

The present disclosure relates to an information processing device, an information processing method, and an information processing program.

### 2. Description of the Related Art

A technique for improving the quality of a workpiece by optimizing machining conditions for the workpiece is known in the related art. For example, JP2021-057030A discloses a technique for determining command data for a machine tool from state data at a certain time point using a trained machine learning model that is trained with state data relating to the machine tool and the accuracy data of a workpiece.

### SUMMARY OF THE INVENTION

Incidentally, the state of a tool or the like used to machine a workpiece may dynamically change. In a case where the state of the tool or the like changes, the quality of the workpiece may also be affected. Accordingly, there is a demand for a technique that can further improve the quality of the workpiece in consideration of the state of the tool dynamically changing.

The present disclosure provides an information processing device according to claim 1, an information processing method according to claim 13, and an information processing program according to claim 14 from which a workpiece having good quality can be obtained.

A workpiece having good quality can be obtained from the information processing device, the information processing method, and the information processing program according to the present disclosure.

Documents WO 2021/060090 A1 and US 2017/270434 A1 represent prior art relevant with regard to what is disclosed herewith.

### BRIEF DESCRIPTION OF THE DRAWINGS

Fig. 1 is a diagram showing the schematic configuration of a control system.
Fig. 2 is a diagram showing specific examples of a combination of a machining method, a tool, and a workpiece.
Fig. 3 is a diagram showing the schematic configuration of a cylindrical grinder.
Fig. 4 is a block diagram showing an example of the hardware configuration of an information processing device.
Fig. 5 is a block diagram showing an example of the functional configuration of the information processing device.
Fig. 6 is a diagram illustrating a radius of a cutting edge end.
Fig. 7 is a diagram illustrating the input and output of information.
Fig. 8 shows an example of learning data for a state variable prediction model.
Fig. 9 shows an example of learning data for a quality prediction model.
Fig. 10 shows an example of target quality.
Fig. 11 shows an example of optimum machining condition data.
Fig. 12 is a diagram showing quality of Examples.
Fig. 13 is a flowchart showing an example of information processing.

### DESCRIPTION OF THE PREFERRED EMBODIMENTS

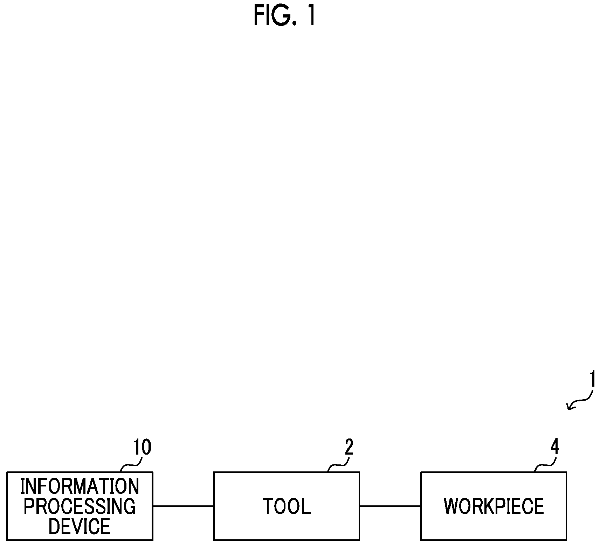

Examples of an embodiment of a technique of the present disclosure will be described in detail below with reference to the drawings. First, an example of the configuration of a control system 1 according to the present embodiment will be described with reference to Fig. 1. As shown in Fig. 1, the control system 1 includes an information processing device 10, a tool 2, and a workpiece 4.

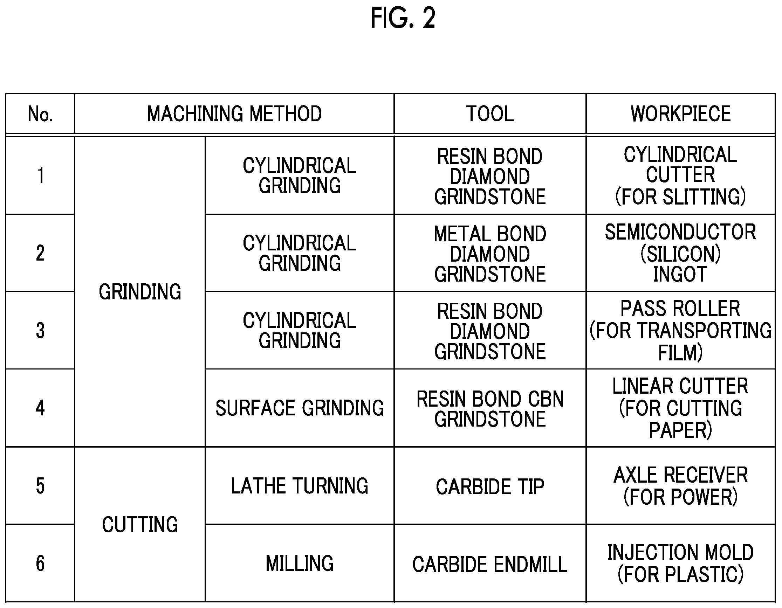

The tool 2 is a tool, a machine tool, an instrument, or the like that is used to machine the workpiece 4. The machining of the workpiece 4 is, for example, various types of machining, such as grinding and cutting. The grinding may be, for example, cylindrical grinding, surface grinding, internal grinding, centerless grinding, thread grinding, gear grinding, copy grinding, cutting, and the like. The cutting may be, for example, lathe turning, drilling, boring, milling, planning, shaping, slotting, broaching, sawing, and the like. Fig. 2 shows specific examples of a combination of a machining method for the workpiece 4, the tool 2, and the workpiece 4.

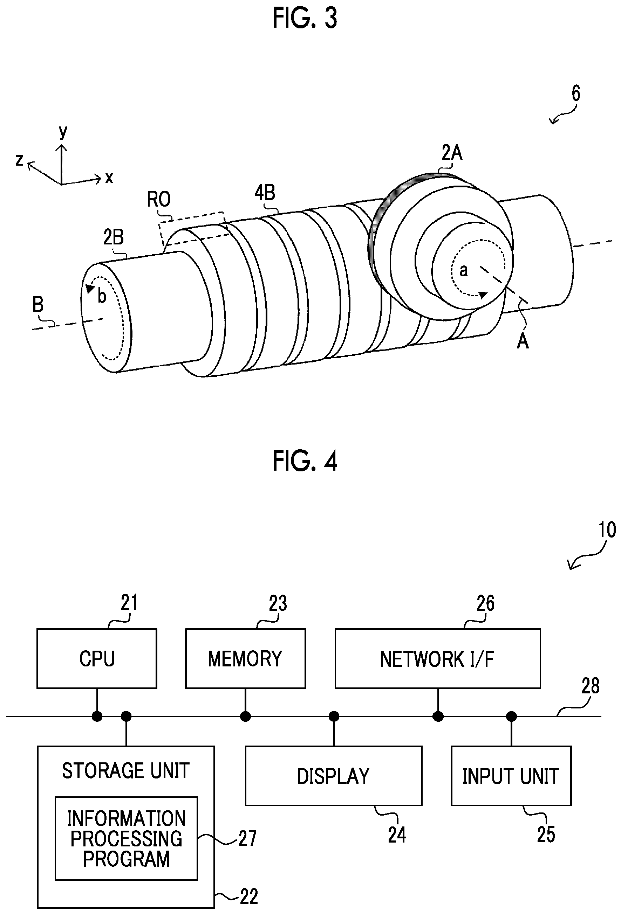

Fig. 3 shows the schematic configuration of a cylindrical grinder 6 that is used to grind a substantially cylindrical cutter 4B using a grindstone 2A. In the cylindrical grinder 6, the grindstone 2A is applied to the cutter 4B, so that the cutter 4B is ground. In this case, the grindstone 2A is rotated about a rotation axis A in a direction of an arrow a, and the cutter 4B is supported by a support 2B that is rotationally driven about a rotation axis B in a direction of an arrow b. That is, the cutter 4B (support 2B) is machined while being rotated, and the grindstone 2A machines the cutter 4B while being rotated. Each of the support 2B and the grindstone 2A is rotationally driven by a drive motor (not shown).

Further, the grindstone 2A and/or the support 2B may be moved in a direction of the rotation axis B of the support 2B (an x direction in Fig. 3) in the cylindrical grinder 6, so that the entire cutter 4B may be machined (so-called traverse machining). Furthermore, wet grinding using grinding fluid may be performed in the cylindrical grinder 6.

The information processing device 10 sets various machining conditions relating to the grindstone 2A and the support 2B, and controls the operations of the grindstone 2A and the support 2B. That is, the cutter 4B is machined according to the machining conditions set by the information processing device 10. The cutter 4B is an example of the workpiece 4, and the grindstone 2A and the support 2B are an example of the tool 2.

Incidentally, the state of the tool 2 may dynamically change according to the machining conditions set by the information processing device 10. In a case where the state of the tool 2 changes, the quality of the workpiece 4 may be affected. Accordingly, the information processing device 10 according to the present embodiment controls the tool 2 using machining conditions in which the state of the tool 2 dynamically changing is considered, in order to obtain the workpiece 4 having good quality. An example of the configuration of the information processing device 10 according to the present embodiment will be described below.

First, an example of the hardware configuration of the information processing device 10 according to the present embodiment will be described with reference to Fig. 4. As shown in Fig. 4, the information processing device 10 includes a central processing unit (CPU) 21, a non-volatile storage unit 22, and a memory 23 as a temporary storage area. Further, the information processing device 10 includes a display 24, such as a liquid crystal display, an input unit 25, such as a keyboard and a mouse, and a network interface (I/F) 26. The network I/F 26 performs wired or wireless communication with the tool 2. The CPU 21, the storage unit 22, the memory 23, the display 24, the input unit 25, and the network I/F 26 are connected to each other via a bus 28, such as a system bus and a control bus, such that various types of information can be given and received therebetween.

The storage unit 22 is realized by, for example, a storage medium, such as a hard disk drive (HDD), a solid state drive (SSD), or a flash memory. An information processing program 27 for the information processing device 10 is stored in the storage unit 22. The CPU 21 reads out the information processing program 27 from the storage unit 22, loads the information processing program 27 in the memory 23, and executes the loaded information processing program 27. The CPU 21 is an example of a processor of the present disclosure. For example, various computers, such as a personal computer, a server computer, and a smartphone, can be applied as the information processing device 10.

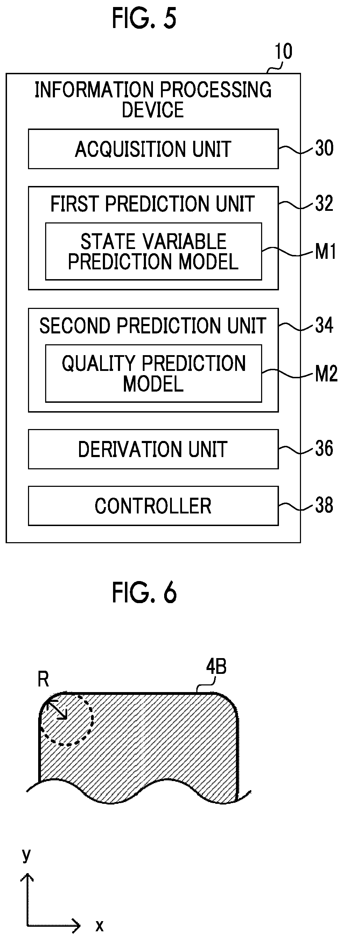

Next, an example of the functional configuration of the information processing device 10 according to the present embodiment will be described with reference to Fig. 5. As shown in Fig. 5, the information processing device 10 includes an acquisition unit 30, a first prediction unit 32, a second prediction unit 34, a derivation unit 36, and a controller 38. The CPU 21 executes the information processing program 27 to function as the acquisition unit 30, the first prediction unit 32, the second prediction unit 34, the derivation unit 36, and the controller 38.

The acquisition unit 30 acquires a state variable X1 at a first time point and a machining condition Y1 at the first time point. "State variable" is a dynamic variable that is related to an element correlated with the quality of the workpiece 4. For example, the acquisition unit 30 may acquire a state variable X1 that is acquired from a sensor (not shown) provided on the tool 2, such as the grindstone 2A and the support 2B. Further, for example, in a case where the first time point is a start time point of machining, the acquisition unit 30 may acquire an initial condition predetermined as the machining condition Y1.

In the case of the cylindrical grinder 6 shown in Fig. 3, the state variable X1 includes, for example, a load of a drive motor for rotationally driving the grindstone 2A, a load of a drive motor for rotationally driving the support 2B, the axial vibration and axial acoustic emission (AE) of the support 2B, the temperature of grinding fluid, and the like. Each of the loads of the drive motors for the grindstone 2A and the support 2B may be represented as, for example, an average value for each sampling unit. Each of the axial vibration and axial AE of the support 2B may be represented as, for example, an intensity average at a certain frequency.

In the case of the cylindrical grinder 6 shown in Fig. 3, the machining condition Y1 may be at least one of, for example, the rotation speed of the grindstone 2A, the cutting depth of the grindstone 2A into the cutter 4B, a cutting time, a cutting speed, or the number of times of cutting. Further, for example, the machining condition Y1 may be at least one of the rotation speed of the support 2B or the relative speeds of the grindstone 2A and the support 2B in the direction of the rotation axis B (the x direction in Fig. 3). The rotation speed of each of the grindstone 2A and the support 2B may be represented as, for example, the rotation speed and/or a rotation distance per unit time.

In the case of the cylindrical grinder 6 shown in Fig. 3, quality Z1 is, for example, at least one of the size and the number of chippings relating to a cutting edge of the cutter 4B, the radius R of a cutting edge end, or a surface roughness. The size and the number of chippings may be represented as, for example, the size and the number of chippings included in an arbitrarily extracted region, or may be represented by representative values, such as an average value, a median value, a minimum value, and a maximum value, of the size and the number of chippings per unit area. Fig. 6 is a cross-sectional view of the cutter 4B taken along an xy plane in a region RO surrounded by a broken line of Fig. 3. Fig. 6 illustrates the radius R of the cutting edge end. The radius R of the cutting edge end may be represented by representative values, such as an average value, a median value, a minimum value, and a maximum value, of the curvature radii of the distal ends of the respective cutters 4B. The surface roughness may be represented by, for example, an arithmetic average roughness Ra, a surface roughness Rz, or the like.

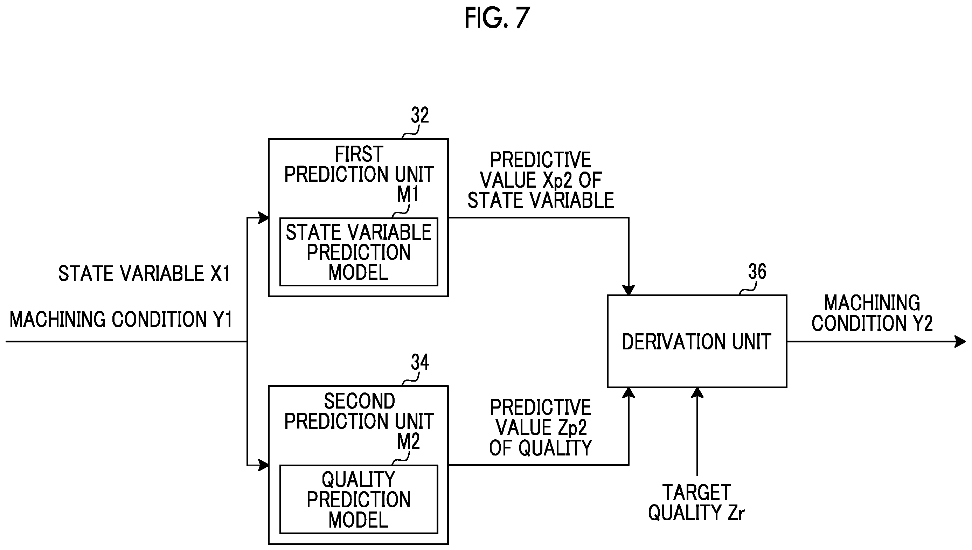

The functions of the first prediction unit 32, the second prediction unit 34, and the derivation unit 36 will be described with reference to Fig. 7. Fig. 7 shows the input and output of information to each functional unit.

The first prediction unit 32 predicts a predictive value Xp2 of a state variable at a second time point after the first time point on the basis of the state variable X1 and the machining condition Y1 at the first time point that are acquired by the acquisition unit 30. The second time point may be determined using the amount of machining of the workpiece 4 and/or an elapsed time from the first time point. For example, the second time point may be a time point when the workpiece 4 at the first time point has been machined by a predetermined amount (for example, 2 µm). Further, for example, the second time point may be a time point when a predetermined period (for example, 2 seconds) has passed from the first time point.

Specifically, the first prediction unit 32 may predict the predictive value Xp2 of the state variable at the second time point using a state variable prediction model M1 that is trained to have the state variable X1 and the machining condition Y1 at the first time point as an input and to have the predictive value Xp2 of the state variable at the second time point as an output. The state variable prediction model M1 includes neural networks, such as a convolutional neural network (CNN) and a recurrent neural network (RNN).

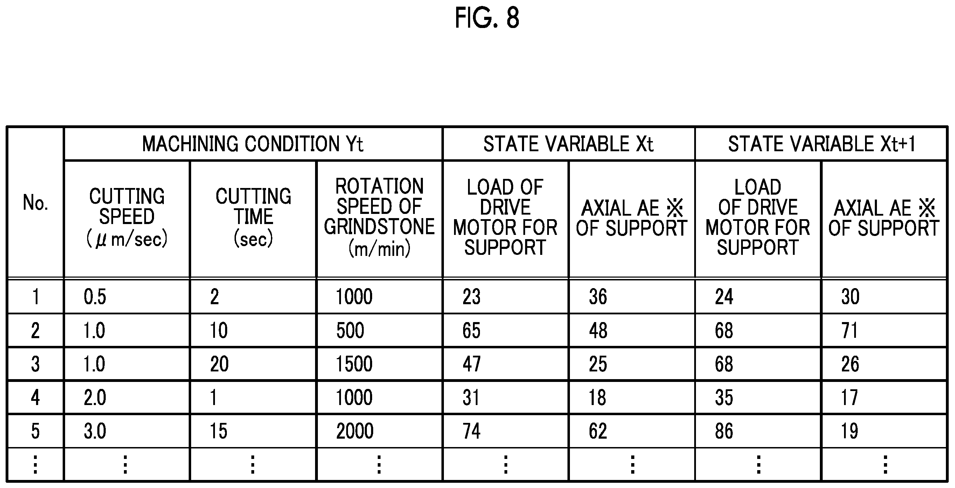

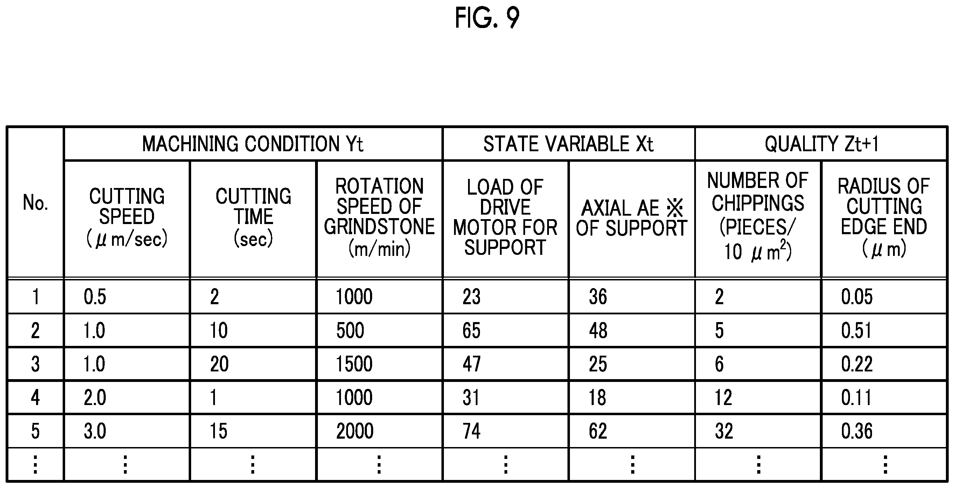

Fig. 8 shows an example of learning data for the state variable prediction model M1. As shown in Fig. 8, the learning data for the state variable prediction model M1 include the actual data of a machining condition Yt and a state variable Xt at a certain time point t and the actual data of a state variable Xt+1 at a time point t+1 after the certain time point t. That is, the learning data for the state variable prediction model M1 are data indicating how the state variable changes up to a subsequent time point t+1 in a case where machining corresponding to a machining condition is performed at a certain time point t. An interval between the certain time point t and the subsequent time point t+1 is the same as an interval between the first time point and the second time point. The axial AE of the support is the value of an intensity average of AE at a frequency of 120 kHz, and the same applies to Figs. 9, 11, and 12 to be described below.

The second prediction unit 34 predicts a predictive value Zp2 of the quality of the workpiece 4 at the second time point on the basis of the state variable X1 and the machining condition Y1 at the first time point that are acquired by the acquisition unit 30. Specifically, the second prediction unit 34 may predict the predictive value Zp2 of the quality of the workpiece 4 at the second time point using a quality prediction model M2 that is trained to have the state variable X1 and the machining condition Y1 at the first time point as an input and to have the predictive value Zp2 of the quality of the workpiece 4 at the second time point as an output. The quality prediction model M2 includes neural networks, such as CNN and RNN.

Fig. 9 shows an example of learning data for the quality prediction model M2. As shown in Fig. 9, the learning data for the quality prediction model M2 include the actual data of a machining condition Yt and a state variable Xt at a certain time point t and the actual data of quality Zt+1 of the workpiece 4 at a time point t+1 after the certain time point t. That is, the learning data for the quality prediction model M2 are data indicating what was the quality of the workpiece 4 after machining in a case where machining corresponding to the machining condition Yt is performed using the tool 2 that has a state variable Xt at the certain time point t.

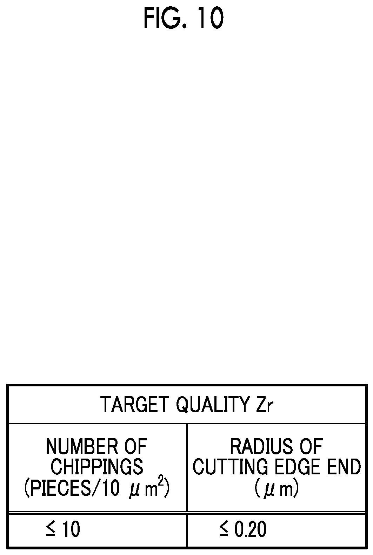

The derivation unit 36 derives a machining condition Y2 at the second time point, which is required to achieve predetermined target quality Zr of the workpiece 4, on the basis of the predictive value Xp2 of the state variable at the second time point that is predicted by the first prediction unit 32. Fig. 10 shows an example of the predetermined target quality Zr. For example, the target quality Zr may be stored in the storage unit 22 or the like in advance, or may be adapted to be capable of being arbitrarily set by a user.

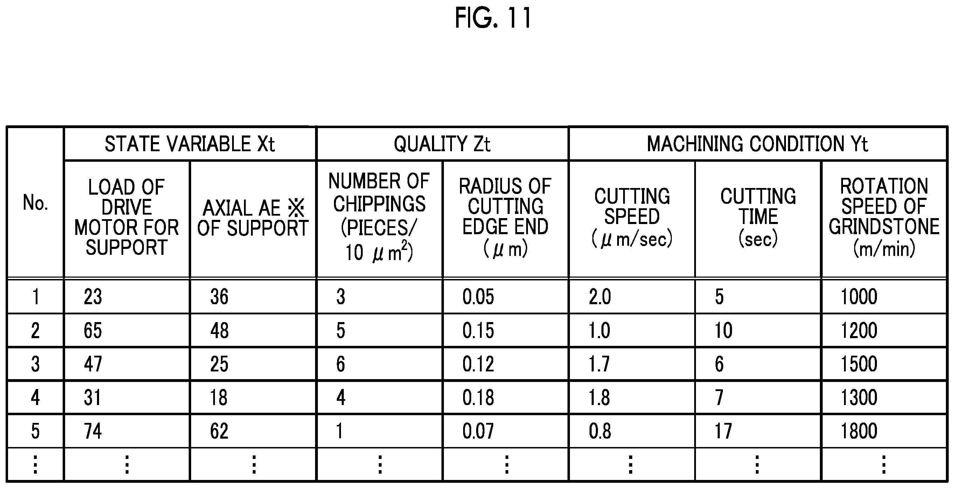

Fig. 11 shows an example of optimum machining condition data in which a machining condition Yt under which good quality Zt satisfying the target quality Zr is obtained is predetermined in a case where a state variable of the tool 2 at a certain time point t is denoted by Xt. The derivation unit 36 may compare the predictive value Xp2 of the state variable at the second time point, which is predicted by the first prediction unit 32, with the optimum machining condition data to derive the machining condition Y2 under which good quality is likely to be obtained at the second time point. For example, the optimum machining condition data may be stored in the storage unit 22 or the like in advance.

Further, the derivation unit 36 derives a machining condition Y2 under which an evaluation value calculated according to a difference between the predictive value Zp2 of the quality of the workpiece 4 at the second time point, which is predicted by the second prediction unit 34, and the target quality Zr is minimized. For example, the quality of the workpiece 4 may be in a trade-off relationship with time required for machining. Accordingly, the derivation unit 36 uses an evaluation value, which is calculated using the quality of the workpiece 4 and time required for machining as variables, to derive the machining condition Y2 under which the time required for machining can also be made as short as possible in a range where the predictive value Zp2 of the quality of the workpiece 4 satisfies the target quality Zr.

The controller 38 controls the tool 2 so that the workpiece 4 is machined according to the machining condition Y2 derived by the derivation unit 36.

Further, the controller 38 may perform a control so that processing performed by the acquisition unit 30, the first prediction unit 32, the second prediction unit 34, and the derivation unit 36 is repeatedly performed. Specifically, the acquisition unit 30 may acquire the state variable X2 at the second time point and the machining condition Y2 at the second time point that is derived by the derivation unit 36. The first prediction unit 32 may predict a predictive value Xp3 of a state variable at a third time point after the second time point on the basis of the state variable X2 and the machining condition Y2 at the second time point that are acquired by the acquisition unit 30. The second prediction unit 34 may predict a predictive value Zp3 of the quality of the workpiece 4 at the third time point on the basis of the state variable X2 and the machining condition Y2 at the second time point that are acquired by the acquisition unit 30. The derivation unit 36 may derive a machining condition Y3 at the third time point, which is required to achieve the target quality Zr, on the basis of the predictive value Xp3 of the state variable at the third time point that is predicted by the first prediction unit 32.

The third time point may be determined using the amount of machining of the workpiece 4 and/or an elapsed time from the second time point. For example, the third time point may be a time point when the workpiece 4 at the second time point has been machined by a predetermined amount (for example, 2 µm). Further, for example, the third time point may be a time point when a predetermined period (for example, 2 seconds) has passed from the second time point.

Even after a fourth time point, likewise, the controller 38 may perform a control so that processing performed by the acquisition unit 30, the first prediction unit 32, the second prediction unit 34, and the derivation unit 36 is repeatedly performed, until the machining of the workpiece 4 is completed. Further, in a case where the amount of machining performed from the start time point of machining satisfies a predetermined amount (for example, 20 µm), the controller 38 may determine that the machining of the workpiece 4 is completed.

### Examples

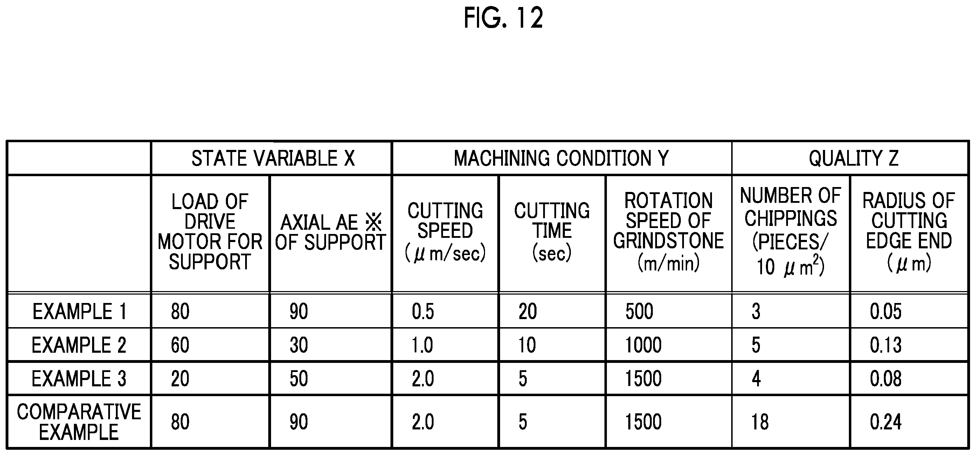

Fig. 12 shows the results of the quality of workpieces 4 that are machined according to the machining conditions derived by the information processing device 10 according to the present embodiment. Further, Fig. 12 also shows the result of the quality of a workpiece 4, which is machined according to a machining condition arbitrarily set by a user, as a comparative example. According to the information processing device 10 of the present embodiment, it can be seen from Fig. 12 that the quality of the workpiece 4 can be improved.

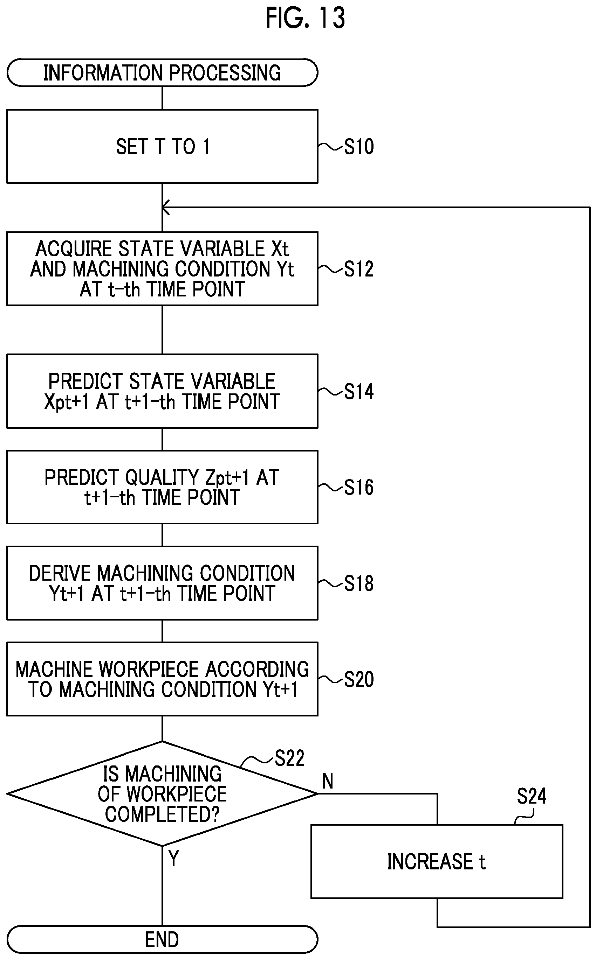

Next, the action of the information processing device 10 according to the present embodiment will be described with reference to Fig. 13. In the information processing device 10, information processing shown in Fig. 13 is performed in a case where the CPU 21 executes the information processing program 27. The information processing is performed in a case where, for example, an instruction to start performing the information processing is given via the input unit 25 by a user.

In Step S10, the controller 38 sets a time point t to 1. In Step S12, the acquisition unit 30 acquires a state variable Xt(X1) and a machining condition Yt(Y1) at a t-th time point (first time point). In Step S14, the first prediction unit 32 predicts a predictive value Xpt+1(Xp2) of a state variable at a t+1-th time point (second time point) on the basis of the state variable Xt(X1) and the machining condition Yt(Y1) acquired in Step S12. In Step S16, the second prediction unit 34 predicts a predictive value Zpt+1(Zp2) of the quality of a workpiece at the t+1-th time point (second time point) on the basis of the state variable Xt(X1) and the machining condition Yt(Y1) acquired in Step S12.

In Step S18, the derivation unit 36 derives a machining condition Yt+1(Y2) at the t+1-th time point (second time point) on the basis of the predictive value Xpt+1(Xp2) of the state variable predicted in Step S14. In this case, the derivation unit 36 derives a machining condition Yt+1(Y2) under which an evaluation value calculated according to a difference between the predictive value Zpt+1(Zp2) of the quality of the workpiece, which is predicted in Step S16, and the target quality Zr is minimized. In Step S20, the controller 38 performs a control so that the workpiece is machined according to the machining condition Yt+1(Y2) derived in Step S18.

In Step S22, the controller 38 determines whether or not the machining of the workpiece is completed. In a case where the machining of the workpiece is not completed (N in Step S22), the processing proceeds to Step S24 and the controller 38 increases the time point t (increases t by 1) and repeats the processing of Steps S12 to S22. On the other hand, in a case where the machining of the workpiece is completed (Y in Step S22), this information processing ends.

As described above, the information processing device 10 according to an aspect of the present disclosure comprises at least one processor. The processor acquires a dynamic state variable, which is related to an element correlated with quality at a first time point of a workpiece to be machined according to a set machining condition, and a machining condition at the first time point; predicts a state variable at a second time point after the first time point on the basis of the state variable and the machining condition at the first time point; and derives a machining condition at the second time point, which is required to achieve predetermined target quality of the workpiece, on the basis of the predicted state variable at the second time point. That is, according to the information processing device 10 of the present embodiment, since the tool 2 can be controlled using a machining condition in which the state of the tool 2 dynamically changing is considered, the quality of the workpiece can be improved.

An aspect in which the derivation unit 36 derives a machining condition using the predictive value Zp2 of the quality of the workpiece 4 predicted by the second prediction unit 34 has been described in the embodiment, but the present disclosure is not limited thereto. For example, in a case where the quality of the workpiece 4 can be actually measured in real time by various sensors, the derivation unit 36 may derives a machining condition using an actually measured value of the quality of the workpiece 4 instead of the predictive value Zp2 of the quality of the workpiece 4 predicted by the second prediction unit 34. In this case, the information processing device 10 may not have the function of the second prediction unit 34.

Further, an aspect in which the first prediction unit 32 and the second prediction unit 34 predict the predictive value Xp2 of the state variable and the predictive value Zp2 of quality at the second time point using learning models, such as CNN and RNN, has been described in the embodiment, but the present disclosure is not limited thereto. For example, the first prediction unit 32 may predict the predictive value Xp2 of the state variable at the second time point using correlation data of a state variable Xt and a machining condition Yt at a certain time point t and a state variable Xt+1 at a subsequent time point t+1. Further, for example, the second prediction unit 34 may predict the predictive value Zp2 of the quality of the workpiece 4 at the second time point using correlation data of a state variable Xt and a machining condition Yt at a certain time point t and the quality Zt+1 of the workpiece 4 at a subsequent time point t+1. For example, these correlation data may be derived in advance and stored in the storage unit 22.

Further, the following various processors can be used in the embodiment as the hardware structures of processing units, such as the acquisition unit 30, the first prediction unit 32, the second prediction unit 34, the derivation unit 36, and the controller 38, which perform various types of processing. The various processors include a programmable logic device (PLD) that is a processor of which the circuit configuration can be changed after manufacture, such as a field programmable gate array (FPGA), a dedicated electrical circuit that is a processor having circuit configuration dedicatedly designed to perform specific processing, such as an application specific integrated circuit (ASIC), and the like in addition to a CPU that is a general-purpose processor functioning as various processing units by executing software (program) as described above.

One processing unit may be formed of one of these various processors, or may be formed of a combination of two or more processors of the same type or different types (for example, a combination of a plurality of FPGAs or a combination of a CPU and an FPGA). Further, a plurality of processing units may be formed of one processor.

As an example where a plurality of processing units are formed of one processor, first, there is an aspect in which one processor is formed of a combination of one or more CPUs and software as typified by a computer, such as a client or a server, and functions as a plurality of processing units. Second, there is an aspect where a processor fulfilling the functions of the entire system, which includes a plurality of processing units, by one integrated circuit (IC) chip as typified by System On Chip (SoC) or the like is used. In this way, various processing units are formed using one or more of the above-mentioned various processors as hardware structures.

In addition, more specifically, electrical circuitry where circuit elements, such as semiconductor elements, are combined can be used as the hardware structures of these various processors.

Further, an aspect in which the information processing program 27 is stored (installed) in the storage unit 22 in advance has been described in the embodiment, but the present disclosure is not limited thereto. The information processing program 27 may be provided in a form where the information processing program 27 is recorded in recording mediums, such as a compact disc read only memory (CD-ROM), a digital versatile disc read only memory (DVD-ROM), and a universal serial bus (USB) memory. Furthermore, the information processing program 27 may be downloaded from an external device through a network. Moreover, the technique of the present disclosure extends to a storage medium in which the information processing program is non-temporarily stored in addition to the information processing program.

The technique of the present disclosure can also be appropriately combined with the embodiment and Examples. The description contents and shown contents having been described above are the detailed description of portions according to the technique of the disclosure, and are merely an example of the technique of the disclosure. For example, the description of the configuration, functions, actions, and effects having been described above is the description of examples of the configuration, functions, actions, and effects of the portions according to the technique of the disclosure. Accordingly, it goes without saying that unnecessary portions may be deleted or new elements may be added or replaced in the description contents and shown contents described above without departing from the scope of the technique of the disclosure.

### Explanation of References

1: control system
2: tool
2A: grindstone
2B: support
4: workpiece
4B: cutter
6: cylindrical grinder
10: information processing device
21: CPU
22: storage unit
23: memory
24: display
25: input unit
26: network I/F
27: information processing program
28: bus
30: acquisition unit
32: first prediction unit
34: second prediction unit
36: derivation unit
38: controller
A, B: rotation axis
M1: state variable prediction model
M2: quality prediction model
R: radius of cutting edge end
RO: region

## Claims

1. An information processing device (10) comprising at least one processor (21), wherein the processor, when executing an information processing program (27), is configured to function as an acquisition unit (30), a first prediction unit (32), a second prediction unit (34), a derivation unit (36) and a controller (38):
wherein the acquisition unit (30) is configured to acquire a dynamic state variable (X1) at a first time point, which is related to an element correlated with quality of a workpiece (4) to be machined according to a set machining condition (Y1), and the machining condition (Y1) at the first time point,
wherein the first prediction unit (32) is configured to predict a predictive value (Xp2) of a state variable at a second time point after the first time point on the basis of the state variable (X1) and the machining condition (Y1) at the first time point,
wherein the second prediction unit (34) is configured to predict a predictive value (Zp2) of quality of the workpiece (4) at the second time point on the basis of the state variable (X1) and the machining condition (Y1) at the first time point, and
wherein the derivation unit (36) is configured to derive a machining condition (Y2) at the second time point, which is required to achieve predetermined target quality of the workpiece (4), on the basis of the predicted state variable at the second time point,
wherein the derivation unit (36) is further configured to derive the machining condition (Y2) under which a first evaluation value calculated according to a difference between the predicted quality (Zp2) of the workpiece (4) at the second time point and a target quality (Zr) is minimized,
wherein the derivation unit (36) is further configured, based on a second evaluation value,
which is calculated using the quality of the workpiece (4) and time required for machining as variables, to derive the machining condition (Y2) under which the time required for machining is made as short as possible in a range where the predictive value (Zp2) of the quality of the workpiece (4) satisfies the target quality (Zr), and
wherein the controller (38) is configured to control a tool (2) so that the workpiece (4) is machined according to the machining condition (Y2) derived by the derivation unit (36).

2. The information processing device according to claim 1, wherein the processor is configured to predict the state variable at the second time point using a trained model that is trained to have the state variable and the machining condition at the first time point as an input and to have the state variable at the second time point as an output.

3. The information processing device according to claim 1, wherein the processor is configured to predict the quality of the workpiece at the second time point using a trained model that is trained to have the state variable and the machining condition at the first time point as an input and to have the quality of the workpiece at the second time point as an output.

4. The information processing device according to any one of claims 1 to 3, wherein the second time point is a time point when the workpiece at the first time point has been machined by a predetermined amount.

5. The information processing device according to any one of claims 1 to 3, wherein the second time point is a time point when a predetermined period has passed from the first time point.

6. The information processing device according to any one of claims 1 to 5, wherein the processor is configured to:
acquire the state variable at the second time point and the machining condition at the second time point,
predict the state variable at a third time point after the second time point on the basis of the state variable and the machining condition at the second time point, and
derive the machining condition at the third time point, which is required to achieve the target quality, on the basis of the predicted state variable at the third time point.

7. The information processing device according to any one of claims 1 to 6, wherein the processor is configured to perform a control to machine the workpiece according to the derived machining condition.

8. The information processing device according to any one of claims 1 to 7, wherein the workpiece has a substantially cylindrical shape and is machined while being rotated.

9. The information processing device according to any one of claims 1 to 8, wherein:
the workpiece has a substantially cylindrical shape, and
a tool used for machining of the workpiece machines the workpiece while being rotated.

10. The information processing device according to claim 8 or 9, wherein:
the workpiece is a cutter,
the machining of the workpiece is grinding for grinding the cutter using a grindstone,
and
the machining condition includes at least one of a rotation speed of the grindstone, a cutting depth, a cutting time, a cutting speed, and a number of times of cutting, a rotation speed of a support supporting the cutter, or relative speeds of the grindstone and the support.

11. The information processing device according to any one of claims 8 to 10, wherein:
the workpiece is a cutter,
the machining of the workpiece is grinding for grinding the cutter using a grindstone,
and
the state variable includes at least one of a load of a drive motor for the grindstone, a load of a drive motor for a support supporting the cutter, axial vibration and axial acoustic emission of the support, or a temperature of grinding fluid.

12. The information processing device according to any one of claims 1 to 11, wherein:
the workpiece is a cutter,
the machining of the workpiece is grinding for grinding the cutter using a grindstone,
and
the quality of the workpiece includes at least one of a size and a number of chippings relating to a cutting edge of the cutter, a radius of a cutting edge end, or a surface roughness.

13. An information processing method comprising:
acquiring a dynamic state variable (X1) at a first time point, which is related to an element correlated with quality of a workpiece (4) to be machined according to a set machining condition (Y1), and the machining condition (Y1) at the first time point;
predicting a predictive value (Xp2) of a state variable at a second time point after the first time point on the basis of the state variable (X1) and the machining condition (Y2) at the first time point;
predicting a predictive value (Zp2) of quality of the workpiece (4) at the second time point on the basis of the state variable (X1) and the machining condition (Y1) at the first time point; and
deriving a machining condition at the second time point, which is required to achieve predetermined target quality of the workpiece (4), on the basis of the predicted state variable at the second time point,
wherein deriving the machining condition at the second time point includes deriving the machining condition (Y2) under which a first evaluation value calculated according to a difference between the predicted quality (Zp2) of the workpiece (4) at the second time point and a target quality (Zr) is minimized, and
wherein deriving the machining condition at the second time point further includes, based on a second evaluation value, which is calculated using the quality of the workpiece (4) and time required for machining as variables, deriving the machining condition (Y2) under which the time required for machining is made as short as possible in a range where the predictive value (Zp2) of the quality of the workpiece (4) satisfies the target quality (Zr),
the method further comprising controlling a tool (2) so that the workpiece (4) is machined according to the machining condition (Y2) derived by the derivation unit (36).

14. A computer-readable storage medium storing an information processing program causing a computer to perform processing comprising:
acquiring a dynamic state variable (X1) at a first time point, which is related to an element correlated with quality of a workpiece (4) to be machined according to a set machining condition (Y1), and the machining condition at the first time point (Y1);
predicting a predictive value (Xp2) of a state variable at a second time point after the first time point on the basis of the state variable (X1) and the machining condition (Y1) at the first time point;
predicting a predictive value (Zp2) of quality of the workpiece (4) at the second time point on the basis of the state variable (X1) and the machining condition (Y1) at the first time point; and
deriving a machining condition at the second time point, which is required to achieve predetermined target quality of the workpiece (4), on the basis of the predicted state variable at the second time point,
wherein deriving the machining condition at the second time point includes deriving the machining condition (Y2) under which a first evaluation value calculated according to a difference between the predicted quality (Zp2) of the workpiece (4) at the second time point and a target quality (Zr) is minimized, and
wherein deriving the machining condition at the second time point further includes, based on a second evaluation value, which is calculated using the quality of the workpiece (4) and time required for machining as variables, deriving the machining condition (Y2) under which the time required for machining is made as short as possible in a range where the predictive value (Zp2) of the quality of the workpiece (4) satisfies the target quality (Zr),
the processing further comprising controlling a tool (2) so that the workpiece (4) is machined according to the machining condition (Y2) derived by the derivation unit (36).

## Patentansprüche

1. Informationsverarbeitungsvorrichtung (10), die mindestens einen Prozessor (21) umfasst, wobei der Prozessor, wenn er ein Informationsverarbeitungsprogramm (27) ausführt, so konfiguriert ist, dass er als eine Erfassungseinheit (30), eine erste Vorhersageeinheit (32), eine zweite Vorhersageeinheit (34), eine Ableitungseinheit (36) und eine Steuerung (38) fungiert:
wobei die Erfassungseinheit (30) so konfiguriert ist, dass sie eine dynamische Zustandsvariable (X1) zu einem ersten Zeitpunkt, die sich auf ein Element, das mit Qualität eines gemäß einer eingestellten Bearbeitungsbedingung (Y1) zu bearbeitenden Werkstücks (4) korreliert, bezieht, und die Bearbeitungsbedingung (Y1) zu dem ersten Zeitpunkt erfasst,
wobei die erste Vorhersageeinheit (32) so konfiguriert ist, dass sie einen Vorhersagewert (Xp2) einer Zustandsvariablen zu einem zweiten Zeitpunkt nach dem ersten Zeitpunkt auf der Grundlage der Zustandsvariablen (X1) und der Bearbeitungsbedingung (Y1) zu dem ersten Zeitpunkt vorhersagt,
wobei die zweite Vorhersageeinheit (34) so konfiguriert ist, dass sie einen Vorhersagewert (Zp2) von Qualität des Werkstücks (4) zu dem zweiten Zeitpunkt auf der Grundlage der Zustandsvariablen (X1) und der Bearbeitungsbedingung (Y1) zu dem ersten Zeitpunkt vorhersagt, und
wobei die Ableitungseinheit (36) so konfiguriert ist, dass sie eine Bearbeitungsbedingung (Y2) zu dem zweiten Zeitpunkt, die erforderlich ist, um vorbestimmte Zielqualität des Werkstücks (4) zu erzielen, auf der Grundlage der vorhergesagten Zustandsvariablen zu dem zweiten Zeitpunkt ableitet,
wobei die Ableitungseinheit (36) ferner so konfiguriert ist, dass sie die Bearbeitungsbedingung (Y2) ableitet, unter der ein erster Bewertungswert, der gemäß einer Differenz zwischen der vorhergesagten Qualität (Zp2) des Werkstücks (4) zu dem zweiten Zeitpunkt und einer Zielqualität (Zr) berechnet wird, minimiert wird,
wobei die Ableitungseinheit (36) ferner so konfiguriert ist, dass sie auf der Grundlage eines zweiten Bewertungswerts, der unter Verwendung der Qualität des Werkstücks (4) und Zeit, die für Bearbeitung erforderlich ist, als Variablen berechnet wird, Bearbeitungsbedingung (Y2) ableitet, unter der die Zeit, die für Bearbeitung erforderlich ist, in einem Bereich, in dem der Vorhersagewert (Zp2) der Qualität des Werkstücks (4) die Zielqualität (Zr) erfüllt, so kurz wie möglich gemacht wird, und
wobei die Steuerung (38) so konfiguriert ist, dass sie ein Werkzeug (2) so steuert, dass das Werkstück (4) gemäß der von der Ableitungseinheit (36) abgeleiteten Bearbeitungsbedingung (Y2) bearbeitet wird.

2. Informationsverarbeitungsvorrichtung nach Anspruch 1, wobei der Prozessor so konfiguriert ist, dass er die Zustandsvariable zu dem zweiten Zeitpunkt unter Verwendung eines trainierten Modells, das so trainiert ist, dass es die Zustandsvariable und die Bearbeitungsbedingung zu dem ersten Zeitpunkt als eine Eingabe aufweist und die Zustandsvariable zu dem zweiten Zeitpunkt als eine Ausgabe aufweist, vorhersagt.

3. Informationsverarbeitungsvorrichtung nach Anspruch 1, wobei der Prozessor so konfiguriert ist, dass er die Qualität des Werkstücks zu dem zweiten Zeitpunkt unter Verwendung eines trainierten Modells, das so trainiert ist, dass es die Zustandsvariable und die Bearbeitungsbedingung zu dem ersten Zeitpunkt als eine Eingabe aufweist und die Qualität des Werkstücks zu dem zweiten Zeitpunkt als eine Ausgabe aufweist, vorhersagt.

4. Informationsverarbeitungsvorrichtung nach einem der Ansprüche 1 bis 3, wobei der zweite Zeitpunkt ein Zeitpunkt ist, zu dem das Werkstück zu dem ersten Zeitpunkt um einen vorbestimmten Betrag bearbeitet wurde.

5. Informationsverarbeitungsvorrichtung nach einem der Ansprüche 1 bis 3, wobei der zweite Zeitpunkt ein Zeitpunkt ist, zu dem eine vorbestimmte Periode von dem ersten Zeitpunkt verstrichen ist.

6. Informationsverarbeitungsvorrichtung nach einem der Ansprüche 1 bis 5, wobei der Prozessor so konfiguriert ist, dass er:
die Zustandsvariable zu dem zweiten Zeitpunkt und die Bearbeitungsbedingung zu dem zweiten Zeitpunkt erfasst,
die Zustandsvariable zu einem dritten Zeitpunkt nach dem zweiten Zeitpunkt auf der Grundlage der Zustandsvariablen und der Bearbeitungsbedingung zu dem zweiten Zeitpunkt vorhersagt, und
die Bearbeitungsbedingung zu dem dritten Zeitpunkt, die erforderlich ist, um die Zielqualität zu erzielen, auf der Grundlage der vorhergesagten Zustandsvariablen zu dem dritten Zeitpunkt ableitet.

7. Informationsverarbeitungsvorrichtung nach einem der Ansprüche 1 bis 6, wobei der Prozessor so konfiguriert ist, dass er eine Steuerung durchführt, um das Werkstück gemäß der abgeleiteten Bearbeitungsbedingung zu bearbeiten.

8. Informationsverarbeitungsvorrichtung nach einem der Ansprüche 1 bis 7, wobei das Werkstück eine im Wesentlichen zylindrische Form aufweist und bearbeitet wird, während es gedreht wird.

9. Informationsverarbeitungsvorrichtung nach einem der Ansprüche 1 bis 8; wobei:
das Werkstück eine im Wesentlichen zylindrische Form aufweist, und
ein Werkzeug, das zum Bearbeiten des Werkstücks verwendet wird, das Werkstück bearbeitet, während es gedreht wird.

10. Informationsverarbeitungsvorrichtung nach Anspruch 8 oder 9, wobei:
das Werkstück ein Schneidwerkzeug ist,
die Bearbeitung des Werkstücks Schleifen zum Schleifen des Schneidwerkzeugs unter Verwendung eines Schleifsteins ist, und
die Bearbeitungsbedingung mindestens eine von einer Drehzahl des Schleifsteins, einer Schnitttiefe, einer Schnittzeit, einer Schnittgeschwindigkeit und einer Anzahl an Malen des Schneidens, einer Drehzahl eines Trägers, der das Schneidwerkzeug trägt, und Relativgeschwindigkeiten des Schleifsteins und des Trägers umfasst.

11. Informationsverarbeitungsvorrichtung nach einem der Ansprüche 8 bis 10; wobei:
das Werkstück ein Schneidwerkzeug ist,
die Bearbeitung des Werkstücks Schleifen zum Schleifen des Schneidwerkzeugs unter Verwendung eines Schleifsteins ist, und
die Zustandsvariable mindestens eine von einer Last eines Antriebsmotors für den Schleifstein, einer Last eines Antriebsmotors für einen Träger, der das Schneidwerkzeug trägt, axialer Schwingung und axialer Schallemission des Trägers oder einer Temperatur von Schleiffluid umfasst.

12. Informationsverarbeitungsvorrichtung nach einem der Ansprüche 1 bis 11; wobei:
das Werkstück ein Schneidwerkzeug ist,
die Bearbeitung des Werkstücks Schleifen zum Schleifen des Schneidwerkzeugs unter Verwendung eines Schleifsteins ist, und
die Qualität des Werkstücks mindestens eine von einer Größe und einer Anzahl an Spänen in Bezug auf eine Schneide des Schneidwerkzeugs, einem Radius eines Schneidenendes und einer Oberflächenrauheit umfasst.

13. Informationsverarbeitungsverfahren, umfassend:
Erfassen einer dynamischen Zustandsvariable (X1) zu einem ersten Zeitpunkt, die sich auf ein Element, das mit Qualität eines gemäß einer eingestellten Bearbeitungsbedingung (Y1) zu bearbeitenden Werkstücks (4) korreliert, bezieht, und der Bearbeitungsbedingung (Y1) zu dem ersten Zeitpunkt;
Vorhersagen eines Vorhersagewerts (Xp2) einer Zustandsvariablen zu einem zweiten Zeitpunkt nach dem ersten Zeitpunkt auf der Grundlage der Zustandsvariablen (X1) und der Bearbeitungsbedingung (Y2) zu dem ersten Zeitpunkt;
Vorhersagen eines Vorhersagewerts (Zp2) von Qualität des Werkstücks (4) zu dem zweiten Zeitpunkt auf der Grundlage der Zustandsvariablen (X1) und der Bearbeitungsbedingung (Y1) zu dem ersten Zeitpunkt; und
Ableiten einer Bearbeitungsbedingung zu dem zweiten Zeitpunkt, die erforderlich ist, um vorbestimmte Zielqualität des Werkstücks (4) zu erzielen, auf der Grundlage der vorhergesagten Zustandsvariablen zu dem zweiten Zeitpunkt,
wobei Ableiten der Bearbeitungsbedingung zu dem zweiten Zeitpunkt Ableiten der Bearbeitungsbedingung (Y2) enthält, unter der ein erster Bewertungswert, der gemäß einer Differenz zwischen der vorhergesagten Qualität (Zp2) des Werkstücks (4) zu dem zweiten Zeitpunkt und einer Zielqualität (Zr) berechnet wird, minimiert wird, und
wobei Ableiten der Bearbeitungsbedingung zu dem zweiten Zeitpunkt ferner auf der Grundlage eines zweiten Bewertungswerts, der unter Verwendung der Qualität des Werkstücks (4) und Zeit, die für Bearbeitung erforderlich ist, als Variablen berechnet wird, Ableiten der Bearbeitungsbedingung (Y2), unter der die Zeit, die für Bearbeitung erforderlich ist, in einem Bereich, in dem der Vorhersagewert (Zp2) der Qualität des Werkstücks (4) die Zielqualität (Zr) erfüllt, so kurz wie möglich gemacht wird, enthält,
wobei das Verfahren ferner Steuern eines Werkzeugs (2) umfasst, so dass das Werkstück (4) gemäß der von der Ableitungseinheit (36) abgeleiteten Bearbeitungsbedingung (Y2) bearbeitet wird.

14. Computerlesbares Speichermedium, das ein Informationsverarbeitungsprogramm speichert, das einen Computer veranlasst, Verarbeitung durchzuführen, die umfasst:
Erfassen einer dynamischen Zustandsvariablen (X1) zu einem ersten Zeitpunkt, die sich auf ein Element, das mit Qualität eines gemäß einer eingestellten Bearbeitungsbedingung zu bearbeitenden Werkstücks (4) korreliert, bezieht, und der Bearbeitungsbedingung (Y1) zu dem ersten Zeitpunkt (Y1);
Vorhersagen eines Vorhersagewerts (Xp2) einer Zustandsvariablen zu einem zweiten Zeitpunkt nach dem ersten Zeitpunkt auf der Grundlage der Zustandsvariablen (X1) und der Bearbeitungsbedingung (Y1) zu dem ersten Zeitpunkt;
Vorhersagen eines Vorhersagewerts (Zp2) von Qualität des Werkstücks (4) zu dem zweiten Zeitpunkt auf der Grundlage der Zustandsvariablen (X1) und der Bearbeitungsbedingung (Y1) zu dem ersten Zeitpunkt; und
Ableiten einer Bearbeitungsbedingung zu dem zweiten Zeitpunkt, die erforderlich ist, um vorbestimmte Zielqualität des Werkstücks (4) zu erzielen, auf der Grundlage der vorhergesagten Zustandsvariablen zu dem zweiten Zeitpunkt,
wobei Ableiten der Bearbeitungsbedingung zu dem zweiten Zeitpunkt Ableiten der Bearbeitungsbedingung (Y2) enthält, unter der ein erster Bewertungswert, der gemäß einer Differenz zwischen der vorhergesagten Qualität (Zp2) des Werkstücks (4) zu dem zweiten Zeitpunkt und einer Zielqualität (Zr) berechnet wird, minimiert wird, und
wobei Ableiten der Bearbeitungsbedingung zu dem zweiten Zeitpunkt ferner auf der Grundlage eines zweiten Bewertungswerts, der unter Verwendung der Qualität des Werkstücks (4) und Zeit, die für Bearbeitung erforderlich ist, als Variablen berechnet wird, Ableiten der Bearbeitungsbedingung (Y2), unter der die Zeit, die für Bearbeitung erforderlich ist, in einem Bereich, in dem der Vorhersagewert (Zp2) der Qualität des Werkstücks (4) die Zielqualität (Zr) erfüllt, so kurz wie möglich gemacht wird, enthält, wobei die Verarbeitung ferner Steuern eines Werkzeugs (2) umfasst, so dass das Werkstück (4) gemäß der von der Ableitungseinheit (36) abgeleiteten Bearbeitungsbedingung (Y2) bearbeitet wird.

## Revendications

1. Dispositif de traitement d'informations (10) comprenant au moins un processeur (21), dans lequel le processeur, lorsqu'il exécute un programme de traitement d'informations (27), est configuré pour fonctionner comme une unité d'acquisition (30), une première unité de prédiction (32), une deuxième unité de prédiction (34), une unité de dérivation (36) et un contrôleur (38) :
dans lequel l'unité d'acquisition (30) est configurée pour acquérir une variable d'état dynamique (X1) à un premier point dans le temps, qui est liée à un élément corrélé avec la qualité d'une pièce (4) à usiner en fonction d'une condition d'usinage réglée (Y1), et la condition d'usinage (Y1) au premier point dans le temps,
dans lequel la première unité de prédiction (32) est configurée pour prédire une valeur prédictive (Xp2) d'une variable d'état à un deuxième point dans le temps après le premier point dans le temps sur la base de la variable d'état (X1) et de la condition d'usinage (Y1) au premier point dans le temps,
dans lequel la deuxième unité de prédiction (34) est configurée pour prédire une valeur prédictive (Zp2) de qualité de la pièce (4) au deuxième point dans le temps sur la base de la variable d'état (X1) et de la condition d'usinage (Y1) au premier point dans le temps, et
dans lequel l'unité de dérivation (36) est configurée pour dériver une condition d'usinage (Y2) au deuxième point dans le temps, qui est requise pour atteindre une qualité cible prédéterminée de la pièce (4), sur la base de la variable d'état prédite au deuxième point dans le temps,
dans lequel l'unité de dérivation (36) est en outre configurée pour dériver la condition d'usinage (Y2) sous laquelle une première valeur d'évaluation calculée en fonction d'une différence entre la qualité prédite (Zp2) de la pièce (4) au deuxième point dans le temps et une qualité cible (Zr) est minimisée,
dans lequel l'unité de dérivation (36) est en outre configurée, sur la base d'une deuxième valeur d'évaluation, qui est calculée en utilisant la qualité de la pièce (4) et
le temps requis pour l'usinage comme variables, pour dériver la condition d'usinage (Y2) dans laquelle le temps requis pour l'usinage est rendu aussi court que possible dans une plage où la valeur prédictive (Zp2) de la qualité de la pièce (4) satisfait la qualité cible (Zr), et
dans lequel le contrôleur (38) est configuré pour contrôler un outil (2) de sorte que la pièce (4) soit usinée en fonction de la condition d'usinage (Y2) dérivée par l'unité de dérivation (36).

2. Dispositif de traitement d'informations selon la revendication 1, dans lequel le processeur est configuré pour prédire la variable d'état au deuxième point dans le temps en utilisant un modèle entraîné qui est entraîné pour avoir la variable d'état et la condition d'usinage au premier point dans le temps comme un entrée et pour avoir la variable d'état au deuxième point dans le temps comme une sortie.

3. Dispositif de traitement d'informations selon la revendication 1, dans lequel le processeur est configuré pour prédire la qualité de la pièce au deuxième point dans le temps en utilisant un modèle entraîné qui est entraîné pour avoir la variable d'état et la condition d'usinage au premier point dans le temps comme une entrée et pour avoir la qualité de la pièce au deuxième point dans le temps comme une sortie.

4. Dispositif de traitement d'informations selon l'une quelconque des revendications 1 à 3, dans lequel le deuxième point dans le temps est un point dans le temps où la pièce au premier point dans le temps a été usinée d'une quantité prédéterminée.

5. Dispositif de traitement d'informations selon l'une quelconque des revendications 1 à 3, dans lequel le deuxième point dans le temps est un point dans le temps où une période prédéterminée s'est écoulée à partir du premier point dans le temps.

6. Dispositif de traitement d'informations selon l'une quelconque des revendications 1 à 5, dans lequel le processeur est configuré pour :
acquérir la variable d'état au deuxième point dans le temps et la condition d'usinage au deuxième point dans le temps,
prédire la variable d'état à un troisième point dans le temps après le deuxième point dans le temps sur la base de la variable d'état et de la condition d'usinage au deuxième point dans le temps, et
dériver la condition d'usinage au troisième point dans le temps, qui est requise pour atteindre la qualité cible, sur la base de la variable d'état prédite au troisième point dans le temps.

7. Dispositif de traitement d'informations selon l'une quelconque des revendications 1 à 6, dans lequel le processeur est configuré pour effectuer du contrôle pour usiner la pièce en fonction de la condition d'usinage dérivée.

8. Dispositif de traitement d'informations selon l'une quelconque des revendications 1 à 7, dans lequel la pièce a une forme sensiblement cylindrique et est usinée tout en étant tournée.

9. Dispositif de traitement d'informations selon l'une quelconque des revendications 1 à 8, dans lequel :
la pièce a une forme sensiblement cylindrique, et
un outil utilisé pour l'usinage de la pièce usine la pièce tout en étant tourné.

10. Dispositif de traitement d'informations selon la revendication 8 ou la revendication 9, dans lequel :
la pièce est un outil de coupe,
l'usinage de la pièce est un usinage par meulage pour meuler l'outil de coupe en utilisant une meule, et
la condition d'usinage inclut au moins l'une d'une vitesse de rotation de la meule, d'une profondeur de coupe, d'un temps de coupe, d'une vitesse de coupe et d'un nombre de fois de coupe, d'une vitesse de rotation d'un support supportant l'outil de coupe et de vitesses relatives de la meule et du support.

11. Dispositif de traitement d'informations selon l'une quelconque des revendications 8 à 10, dans lequel :
la pièce est un outil de coupe,
l'usinage de la pièce est un usinage par meulage pour meuler l'outil de coupe en utilisant une meule, et
la variable d'état inclut au moins l'une d'une charge d'un moteur d'entraînement pour la meule, d'une charge d'un moteur d'entraînement pour un support supportant l'outil de coupe, de vibration axiale et d'émission acoustique axiale du support ou d'une température de fluide de meulage.

12. Dispositif de traitement d'informations selon l'une quelconque des revendications 1 à 11, dans lequel :
la pièce est un outil de coupe,
l'usinage de la pièce est un usinage par meulage pour meuler l'outil de coupe en utilisant une meule, et
la qualité de la pièce inclut au moins l'une d'une taille et d'un nombre de copeaux concernant un biseau de coupe de l'outil de coupe, d'un rayon d'une extrémité de biseau de coupe et d'une rugosité de surface.

13. Procédé de traitement d'informations comprenant :
acquérir une variable d'état dynamique (X1) à un premier point dans le temps, qui est liée à un élément corrélé avec la qualité d'une pièce (4) à usiner en fonction d'une condition d'usinage réglée (Y1), et la condition d'usinage (Y1) au premier point dans le temps ;
prédire une valeur prédictive (Xp2) d'une variable d'état à un deuxième point dans le temps après le premier point dans le temps sur la base de la variable d'état (X1) et de la condition d'usinage (Y2) au premier point dans le temps ;
prédire une valeur prédictive (Zp2) de qualité de la pièce (4) au deuxième point dans le temps sur la base de la variable d'état (X1) et de la condition d'usinage (Y1) au premier point dans le temps ; et
dériver une condition d'usinage au deuxième point dans le temps, qui est requise pour atteindre une qualité cible prédéterminée de la pièce (4), sur la base de la variable d'état prédite au deuxième point dans le temps,
dans lequel dériver la condition d'usinage au deuxième point dans le temps inclut dériver la condition d'usinage (Y2) dans laquelle une première valeur d'évaluation calculée en fonction d'une différence entre la qualité prédite (Zp2) de la pièce (4) au deuxième point dans le temps et une qualité cible (Zr) est minimisée, et
dans lequel dériver la condition d'usinage au deuxième point dans le temps inclut en outre, sur la base d'une deuxième valeur d'évaluation, qui est calculée en utilisant la qualité de la pièce (4) et le temps requis pour l'usinage comme variables, dériver la condition d'usinage (Y2) dans laquelle le temps requise pour l'usinage est rendu aussi court que possible dans une plage où la valeur prédictive (Zp2) de la qualité de la pièce (4) satisfait la qualité cible (Zr),
le procédé comprenant en outre contrôler un outil (2) de sorte que la pièce (4) soit usinée en fonction de la condition d'usinage (Y2) dérivée par l'unité de dérivation (36).

14. Support de stockage lisible par ordinateur stockant un programme de traitement d'informations amenant un ordinateur à effectuer du traitement comprenant :
acquérir une variable d'état dynamique (X1) à un premier point dans le temps, qui est liée à un élément corrélé avec la qualité d'une pièce (4) à usiner en fonction d'une condition d'usinage réglée (Y1), et la condition d'usinage au premier point dans le temps (Y1) ;
prédire une valeur prédictive (Xp2) d'une variable d'état à un deuxième point dans le temps après le premier point dans le temps sur la base de la variable d'état (X1) et de la condition d'usinage (Y1) au premier point dans le temps ;
prédire une valeur prédictive (Zp2) de qualité de la pièce (4) au deuxième point dans le temps sur la base de la variable d'état (X1) et de la condition d'usinage (Y1) au premier point dans le temps ; et
dériver une condition d'usinage au deuxième point dans le temps, qui est requise pour atteindre une qualité cible prédéterminée de la pièce (4), sur la base de la variable d'état prédite au deuxième point dans le temps,
dans lequel dériver la condition d'usinage au deuxième point dans le temps inclut dériver la condition d'usinage (Y2) dans laquelle une première valeur d'évaluation calculée en fonction d'une différence entre la qualité prédite (Zp2) de la pièce (4) au deuxième point dans le temps et une qualité cible (Zr) est minimisée, et
dans lequel dériver la condition d'usinage au deuxième point dans le temps inclut en outre, sur la base d'une deuxième valeur d'évaluation, qui est calculée en utilisant la qualité de la pièce (4) et le temps requis pour l'usinage comme variables, dériver la condition d'usinage (Y2) dans laquelle le temps requise pour l'usinage est rendu aussi court que possible dans une plage où la valeur prédictive (Zp2) de la qualité de la pièce (4) satisfait la qualité cible (Zr),
le traitement comprenant en outre contrôler un outil (2) de sorte que la pièce (4) soit usinée en fonction de la condition d'usinage (Y2) dérivée par l'unité de dérivation (36).
